# EUROPEAN PATENT SPECIFICATION

(11) **EP 1 693 838 B1**
(45) Date of publication and mention of the grant of the patent: **14.05.2008**
(21) Application number: 06002755.4
(22) Date of filing: 10.02.2006
(51) Int. Cl.: G11B 7/09, H04N 5/76, G11B 5/09

(54) **Recording apparatus, reproduction apparatus and control method**
Aufzeichnungsvorrichtung, Wiedergabevorrichtung und Steuerverfahren
Appareil d'enregistrement, appareil de reproduction et procédé de commande

(30) Priority: 22.02.2005 JP 2005046170
(43) Date of publication of application: 23.08.2006
(73) Proprietor: Sony Corporation, Tokyo (JP)
(72) Inventor: Koizumi, Yoshihiro, Shinagawa-ku Tokyo (JP); Okamoto, Atsuo, Shinagawa-ku Tokyo (JP); Harata, Tsuyoshi, Shinagawa-ku Tokyo (JP); Shimizu, Masahiro, Shinagawa-ku Tokyo (JP); Yano, Ryuji, Shinagawa-ku Tokyo (JP); Mawatari, Hideki, Shinagawa-ku Tokyo (JP)
(74) Representative: Müller - Hoffmann & Partner

(56) References cited:
- EP-A- 0 616 323
- US-A- 5 363 364
- US-A- 5 699 336
- US-A- 5 740 143
- US-A- 5 848 032

## Description

### BACKGROUND OF THE INVENTION

### 1. Field of the Invention

The present invention relates to a recording apparatus for recording compressed data onto an optical recording medium, a method of controlling the recording apparatus, a reproduction apparatus for reading compressed data recorded on an optical recording medium, and a method of controlling the reproduction apparatus.

### 2. Description of the Related Art

Among known AV (Audio-Video) apparatuses, there are AV apparatuses for performing compression processing, for example using MPEG (Moving Picture Expert Group), on input audio-video data to record the compressed audio-video data onto an optical recording medium such as a DVD, etc. In such an AV apparatus, a recording method called intermittent recording is used in order to match the timings of the time necessary for compression processing and the time necessary for recording processing. The intermittent recording is a recording method in which a "recording" state and a "recording-standby" state are repeated alternately. That is to say, the compression of the audio-video data is waited in the "recording-standby" state, and the compressed audio-video data is recorded onto the optical recording medium in the "recording" state.

A general procedure of the intermittent recording is described below by taking a digital camera as an example. In a digital camera, (1) audio-video data converted into electronic signals by an imager such as CCDs (Charge Coupled Devices) and a microphone is input. (2) The audio-video data is subjected to compression processing using MPEG, etc., and is temporarily stored into a memory. (3) When a certain amount of the audio-video data is stored, the data stored in the memory is read in accordance with the recording speed of the optical recording medium to be recorded onto the optical recording medium. (4) When the recording of the audio-video data stored in the memory is completed, the processing is waited until the audio-video data is stored in the memory once again. The sequence from (1) to (4) is repeated in the recording processing of the digital camera.

The processing of (1) and (2) are operated in real time for the audio-video data to be captured. In the recording processing of (4), the bit rate is higher than that of the compression processing of (3), and thus standby time is necessary for the processing of (3). Accordingly, in the data recording of an optical recording medium, intermittent recording, in which a "recording" state and a "recording-standby" state are repeated alternately, is performed.

In the "recording" state of (3), a recording-reproduction system such as a laser emitting part, a reflection-light receiving part, etc., and a servo system such as a tracking servo, a thread servo, etc., are activated. In the "recording-standby" state of (4), electric power consumed in the recording-reproduction system and the servo system is wasteful, and thus it is desirable to reduce the electric power consumed at this time as little as possible. Accordingly, in the "recording-standby" state, the recording-reproduction system and the servo system are set to a power-saving state.

When the spindle servo for controlling the rotational speed of a disc is set to a power-saving state, it becomes difficult to maintain an appropriate rotational speed. When the rotational speed changes, problems arises in that (1) the sound of the spindle motor is generated, and is recorded in the audio data as noise even by a slight change of the speed, (2) it takes time until the disc attains an appropriate speed at the next "recording", and the standby time becomes short as a result, and thus the power-saving effect becomes little, and (3) in case that the rotation stops, it becomes necessary to have a large current at starting time, and thus an adverse effect to the power saving is produced.

In a known technique, in order to handle these problems, first, a target voltage is determined by measuring a drive voltage applied to the spindle motor at the time when servo control is performed during recording or during reproduction. Thereafter, the determined target voltage is given to the spindle motor as an alternative voltage, and thus an appropriate rotational speed is maintained (for example, Japanese Unexamined Patent Application Publication No. 2002-93032).

US-A-5 740 143 discloses a reproducing apparatus in which the data recorded on a disc shaped recording medium is read out intermittently, wherby during one period of the intermittent read out a controller discontinues operation of the servo control unit. In an embodiment of the reproducing apparatus the recording medium is rotated at a constant angular velocity during that period. In this case a preset driving signal is supplied to the spindle motor; so that the reproducing apparatus is not controlled by closed loop control but with open loop control.

US-A-59 699 336 discloses a reproducing apparatus which has a buffer memory and which is capable of rapidly restating reproduction after a power saving mode. To effect the power supply saving mode, power supply is stopped at various components of the apparatus as well as turning off tracking and thread servos and reducing the gain of the focus servo.

### SUMMARY OF THE INVENTION

However, known spindle control is performed by open loop control. Thus, when some factor that causes the alternative voltage to change during the "recording-standby" or immediately before the "recording-standby" arises, there is no feedback capability against this change. Accordingly, it sometimes becomes difficult to maintain an appropriate rotational speed. The factors that cause the alternative voltage to change include, for example, the change of load on the spindle by vibration, impact, force of inertia, etc., applied to the camcorder. Although, a description has been given of the intermittent recording, the same description will be given of the intermittent reproduction.

The present invention has been made in view of the above-described problems. It is desirable to provide a recording apparatus which maintains a state suitable for starting the recording operation at recording standby time of an optical recording medium and a control method of the recording apparatus. Also, it is desirable to provide a reproduction apparatus which maintains a suitable state for starting a reading operation at reading standby time of the optical recording medium and a control method of the reproduction apparatus.

According to an embodiment of the present invention, there is provided a recording apparatus including: recording means having a drive part including rotational drive means for rotating an optical recording medium in order to record data onto the optical recording medium; data coding means for coding data; and recording control means for storing the coded data into storage means, and controlling the recording means to record the data stored in the storage means onto the optical recording medium, wherein the recording control means includes overall control means for controlling the recording control means overall, and servo control means for servo-controlling the drive part of the recording means. The recording apparatus is characterized in that in a recording-standby state standing by to store the coded data, the overall control means stops operation of the servo control means, and at the same time servo-controls the rotational drive means by applying a voltage for setting a rotational frequency of the rotational drive means to a target rotational frequency and by feeding back the rotational frequency of the rotational drive means.

According to an embodiment of the present invention, there is provided a method of controlling a recording apparatus having recording means comprising a drive part including rotational drive means for rotating an optical recording medium in order to record data onto the optical recording medium, the method comprising the steps of: coding data; storing the coded data and controlling the recording means by recording control means to record the stored data onto the optical recording medium; controlling the recording control means overall by overall control means; servo-controlling the drive part of the recording means by servo control means when storing the coded data is completed in a recording state. The method is characterized by the step of stopping operation of the servo control means and at the same time servo-controlling the rotational drive means by the overall control means in a recording-standby state standing by to store the coded data, by applying a voltage for setting a rotational frequency of the rotational drive means to a target rotational frequency and by feeding back the rotational frequency of the rotational drive means.

According to an embodiment of the present invention, there is provided a reproduction apparatus including: reading means having a drive part including rotational drive means for rotating an optical recording medium in order to read coded data recorded in the optical recording medium; read control means for controlling the reading means; storing means for storing the read coded data; and decoding means for decoding the stored coded data, wherein the read control means includes overall control means for controlling the read control means overall, and servo control means for servo-controlling the drive part of the reading means. The recording apparatus is characterized in that in a reading-standby state standing by to decode the coded data stored in the storing means, the overall control means stops operation of the servo control means and at the same time servo-controls the rotational drive means by applying a voltage for setting a rotational frequency of the rotational drive means to a target rotational frequency and by feeding back the rotational frequency of the rotational drive means.

According to an embodiment of the present invention, there is provided a method of controlling a reproduction apparatus having a drive part including rotational drive means for rotating an optical recording medium in order to read coded data recorded onto the optical recording medium, the method comprising the steps of: reading coded data recorded in the optical recording medium of the reproduction apparatus; storing the read coded data into storing means; decoding the stored coded data by decoding means; controlling the read control means overall by overall control means and servo-controlling the drive part of the reading means by servo control means in a reading state. The method is characterized by the step of stopping operation of the servo control means and at the same time servo-controlling the rotational drive means by the overall control means in a reading-standby state standing by to decode the coded data stored in the storing means, by applying a voltage for setting a rotational frequency of the rotational drive means to a target rotational frequency and by feeding back the rotational frequency of the rotational drive means.

In a recording apparatus to which the present invention is applied, the operation of the servo control means is stopped in the "recording-standby" state in which the storing of the coded data is stood by, and the servo control of the rotational drive means is alternated with the overall control means. Thus, it is possible to reduce the power consumption necessary for the servo control of the entire drive part, and to continue the servo control of the rotational drive means in order to maintain the rotational drive means at a suitable state for starting the recording operation.

In a reproduction apparatus to which the present invention is applied, the operation of the servo control means is stopped in a "reading-standby" state in which the decoding of the coded data stored in the storing means is stood by, and the servo control of the rotational drive means is alternated with the overall control means. Thus, it is possible to reduce the power consumption necessary for the servo control of the entire drive part, and to continue the servo control of the rotational drive means in order to maintain the rotational drive means at a suitable state for starting the reading operation.

### BRIEF DESCRIPTION OF THE DRAWINGS

Fig. 1 is a block diagram illustrating the configuration of a recording-reproduction apparatus;
Fig. 2 is a block diagram illustrating the configuration of an AV interface;
Fig. 3 is a block diagram illustrating an audio-video data flow in intermittent recording;
Fig. 4 is a block diagram illustrating the configuration of a drive controller and a disc drive;
Fig. 5 is a flowchart illustrating the operation of the recording-reproduction apparatus;
Fig. 6 is a flowchart illustrating the operation of a microcomputer and a DSP when the processing moves from a "recording operation" state to a "wait recording" state; and
Fig. 7 is a flowchart illustrating the operation of a microcomputer and a DSP when the processing moves from the "wait recording" state to the "recording operation" state.

### DESCRIPTION OF THE PREFERRED EMBODIMENTS

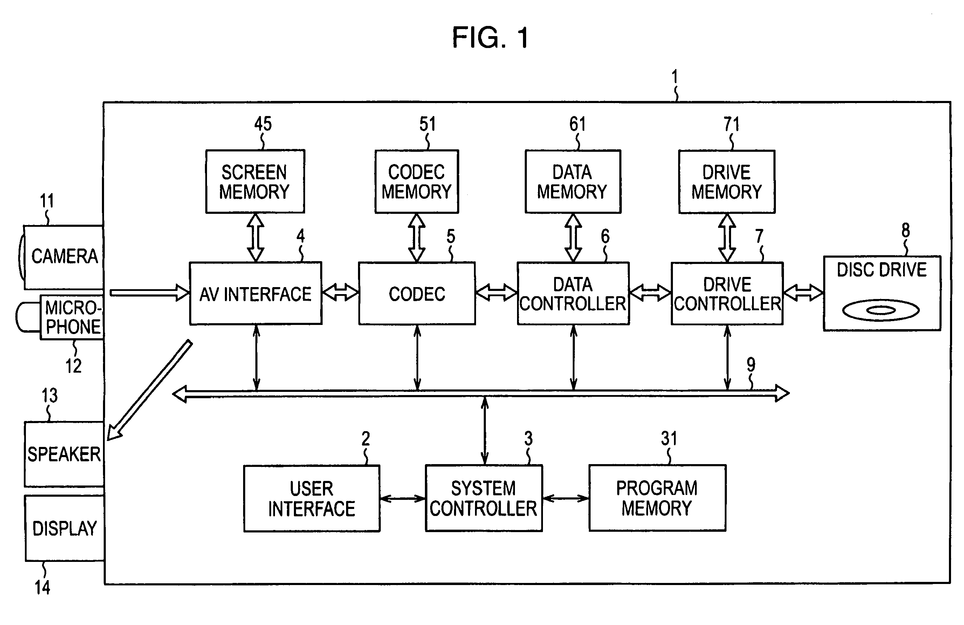

In the following, a description will be given of a recording-reproduction apparatus 1 to which the present invention is applied with reference to the drawings. Fig. 1 shows the configuration of the recording-reproduction apparatus 1. The recording-reproduction apparatus 1 includes a user interface 2 for receiving a user's input and informing the user of the state of the apparatus, a system controller 3 for controlling the entire apparatus, an AV (audio-video) interface 4 for relaying an input/output device such as a camera 11, an unillustrated display, etc., and the recording-reproduction apparatus 1, a CODEC 5 for compressing and expanding audio-video data, a data controller 6 for controlling data flow, a disc drive 8 for recording and reproducing to and from an optical recording medium, a drive controller 7 for controlling the disc drive 8, a display 14 for outputting video data, and a speaker 13 for outputting an audio signal.

The user interface 2 receives input from the user through an input part, such as a key-input button, a switch 75, etc., and informs the user of the state of the apparatus through an output part, such as a light emitting element, an acoustic element, etc.

The system controller 3 loads a system control program and a file system into a program memory 31 as a working memory, and outputs control signals to each block of the recording-reproduction apparatus 1. The system controller 3 uses a system control bus 9 for the transmission of the control signals.

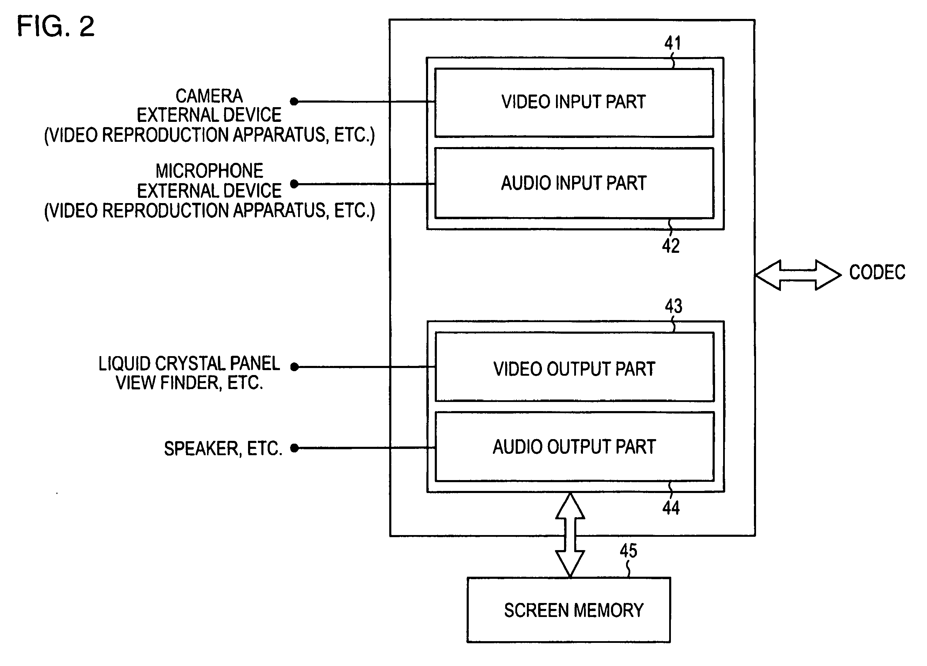

As shown in Fig. 2, the AV interface 4 includes a video input part 41, an audio input part 42, a video output part 43, and an audio output part 44. The video input part 41 receives input of video data from the camera 11, an external device, etc., and the audio input part 42 receives input of sound from the microphone 12, an external device, etc. The video output part 43 outputs video data to a liquid crystal panel, a view finder, etc., and the audio output part 44 outputs an audio signal to the speaker 13, etc. The AV interface 4 outputs the video data captured by the camera 11 and the audio signal obtained by the microphone 12 to the view finder and the speaker 13 in real time. When an image is output to the view finder, the AV interface 4 superimposes a screen image on the output image. The screen image is stored in a screen memory 45. Characters and icons are drawn on the screen image.

Next, a description will be given of the CODEC 5, the data controller 6, the drive controller 7 at data recording time. The AV interface 4 outputs the audio-video data obtained from the camera 11 and the microphone 12 to the CODEC 5. The CODEC 5 compresses the input audio-video data. Here, MPEG (Moving Picture Expert Group) is used as a compression method of the audio-video data. A CODEC memory 51 is a work area of the CODEC 5. The CODEC memory 51 stores differential signal compression between frames or fields of the video data.

The data controller 6 controls the data flow between the CODEC 5 and the drive controller 7. The data controller 6 and the drive controller 7 transmit and receive audio-video data in accordance with a discontinuous handshake protocol. In this protocol, the data controller 6 stores the data input from the CODEC 5 into a data memory 61, and transfers the data stored in the data memory 61 to the drive controller 7 when a certain amount of the data is stored in the data memory 61.

The data controller 6 transfers the data to the drive controller 7, and determines the state transition between the "recording" state and the "recording-standby" state of the drive controller 7. The drive controller 7 writes the audio-video data stored in the drive memory 71 onto the optical recording medium in response to the instruction from the data controller 6.

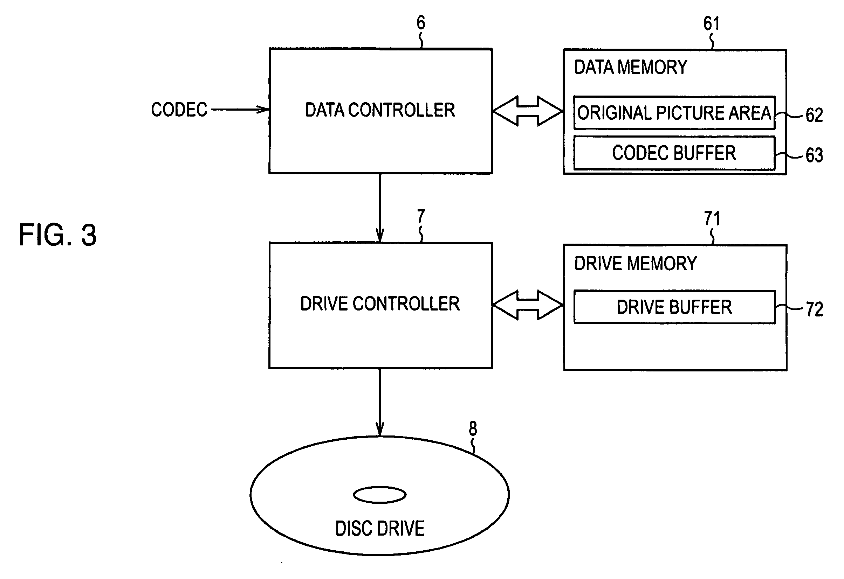

The drive controller 7 repeats the "recording-standby" state in which data from the data controller 6 is waited and the "recording" state in which data is written into the optical recording medium. Such a recording method is called intermittent recording. A description will be given of the intermittent recording using Fig. 3. The audio-video data compressed by the CODEC 5 is output to the data controller 6. The video data transmitted to the data controller 6 is temporarily stored in an original picture area 62 in the data memory 61 contained in the data controller 6. The CODEC 5 performs MPEG compression on the video data stored in the original picture area 62, and stored the data into a CODEC buffer 63. The CODEC 5 stores the compressed audio-video data into the buffer area for each compression of the audio-video data. When the data stored in the CODEC buffer 63 reaches a certain size, the data controller 6 transfers the audio-video data stored in the CODEC buffer 63 to the drive controller 7. The transfer rate at this time is sufficiently higher than the storage speed of the audio-video data into the CODEC buffer 63.

The drive controller 7 stores the audio-video data output from the data controller 6 into a drive buffer 72 of the drive memory 71. The drive controller 7 controls the disc drive 8 to record the audio-video data stored in the drive buffer 72 onto an optical recording medium. The recording speed at this time is sufficiently higher than the storage speed of the audio-video data into the CODEC buffer 63. Thereafter, the compression processing of the audio-video data and the recording processing of the compressed audio-video data are repeated until the completion of the recording. During this period, the "recording" state onto the optical recording medium and the "recording-standby" state of waiting the storage of the audio-video data are repeated alternately.

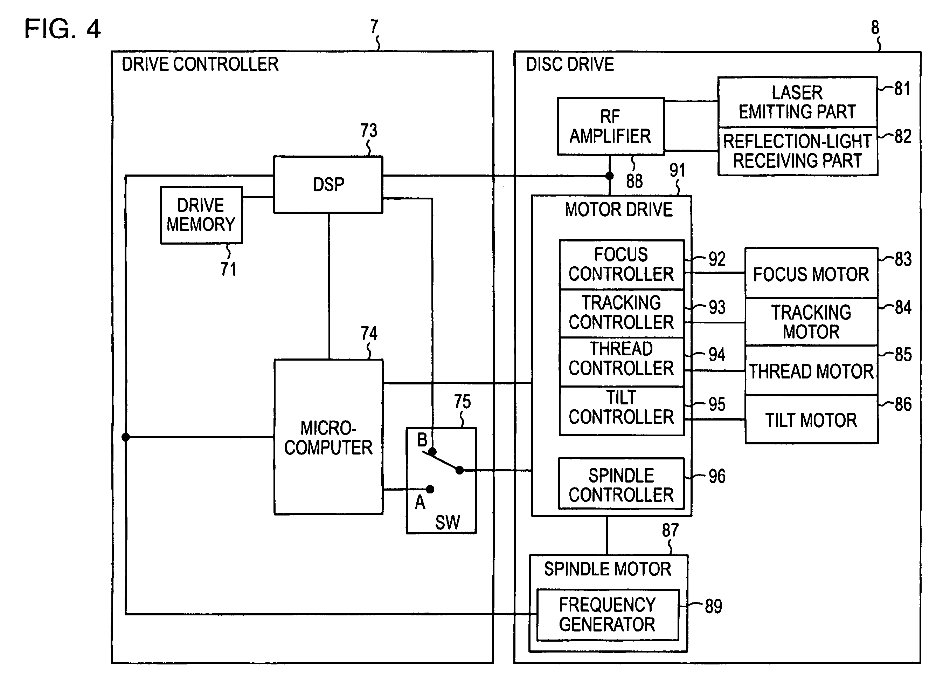

As shown in Fig. 4, the drive controller 7 includes a drive memory 71, a DSP 73, a microcomputer 74, and a switch 75. The DSP 73 controls the recording operation of the disc drive 8.

The disc drive 8 includes a laser emitting part 81 for emitting laser onto the optical recording medium, a reflection-light receiving part 82 for receiving reflection light from an optical recording medium, a focus motor 83 for adjusting a focal depth of the lens, a tracking motor 84 for causing the laser to follow the tracks, a thread motor 85 for moving the pickup in the diametrical direction of a disc, a tilt motor 86 for adjusting the tilt of the lens, a spindle motor 87 for rotating the disc, and a motor drive 91 for driving each motor. The motor drive 91 includes a focus controller 92 for controlling the focus motor 83, a tracking controller 93 for controlling the tracking motor 84, a thread controller 94 for controlling the thread motor 85, a tilt controller 95 for controlling the tilt motor 86, and a spindle controller 96 for controlling the spindle motor 87.

The DSP 73 performs closed-loop control on the laser emitting part 81, the focus controller 92, the tracking controller 93, the thread controller 94, the tilt controller 95, and the spindle controller 96 of the disc drive 8. Specifically, the DSP 73 controls the output of the laser emitting part 81 through an RF (Radio Frequency) amplifier 88 of the laser emitting part 81, controls the focus controller 92, the thread controller 94, and the tilt motor 86 based on the tracking error signal from the reflection-light receiving part 82, and controls the focus controller 92 based on the focus error signal from the reflection-light receiving part 82. Also, the DSP 73 receives input of a rectangular wave indicating a rotational frequency of the spindle motor 87 from a frequency generator 89 of the spindle motor, and controls the spindle controller 96 based on this rotational frequency.

The microcomputer 74 controls the drive controller 7 overall, and performs processing for changing the disc drive 8 between the "recording" state and the "recording-standby" state in accordance with an instruction from the data controller 6.

The microcomputer 74 performs stop processing of the operation of the DSP 73 and the control of the spindle motor 87 as the processing of changing the disc drive 8 to the "recording-standby" state. When the operation of the DSP 73 is stopped, the operations of the laser emitting part 81, the reflection-light receiving part 82, and the RF amplifier 88 are stopped. Also, the operations of the focus controller 92, the tracking controller 93, the thread controller 94, and the tilt controller 95 are stopped, and thus the operations of the focus motor 83, the tracking motor 84, the thread motor 85, and the tilt motor 86 are stopped.

A switch 75 is provided between the microcomputer 74 and the motor drive 91. The microcomputer 74 controls to change the switch 75 to an A-terminal in the "recording" state, and change the switch 75 to a B-terminal in the "recording-standby" state. When the microcomputer 74 changes the switch 75 to the A-terminal, the microcomputer 74 is connected to the motor drive 91. The microcomputer 74 outputs a control signal to the motor drive 91 to control the spindle motor 87. The microcomputer 74 is connected to the frequency generator 89 of the spindle motor 87. The frequency generator 89 outputs a rectangular wave indicating the number of revolutions of the spindle motor 87. The microcomputer 74 controls the spindle motor 87 while monitoring the rectangular wave output from the frequency generator 89.

In the "recording-standby" state, the four motors, that is to say, the focus motor 83, the tracking motor 84, the thread motor 85, and the tilt motor 86 are stopped. It is possible to reduce power consumption by stopping unnecessary motors in the "recording-standby" state.

Also, at this time, the laser emitting part 81 and the reflection-light receiving part 82 are also stopped. It is possible to reduce power consumption by stopping the laser emitting part 81 and the reflection-light receiving part 82 in the "recording-standby" state.

When having received the instruction to move to the "recording" state from the data controller 6, the microcomputer 74 changes the disc drive 8 to the "recording state". The microcomputer 74 restarts the operation of the DSP 73 and changes the switch 75 to the B-terminal as the processing for changing to the "recording state". When the microcomputer 74 has restarted the operation of the DSP 73, the microcomputer 74 controls the output of the laser emitting part 81 through the RF amplifier 88 of the laser emitting part 81, and generates control signals for controlling the focus controller 92, the tracking controller 93, the thread controller 94, the tilt controller 95, and the spindle controller 96 based on the signals from the reflection-light receiving part 82. The microcomputer 74 changes the switches of the focus motor 83, the tracking motor 84, the thread motor 85, and the tilt motor 86 to ON to restart the recording operation. The disc drive 8 records the audio-video data stored in the drive memory 71 onto the optical recording medium under the control of the DSP 73.

When the microcomputer 74 receives the instruction to move to the "recording-standby" state from the data controller 6, the microcomputer 74 changes the disc drive 8 from the "recording" state to the "recording-standby" state. In the "recording-standby" state, the operations other than the operation of the spindle motor 87 are turned OFF in order to reduce the power consumption.

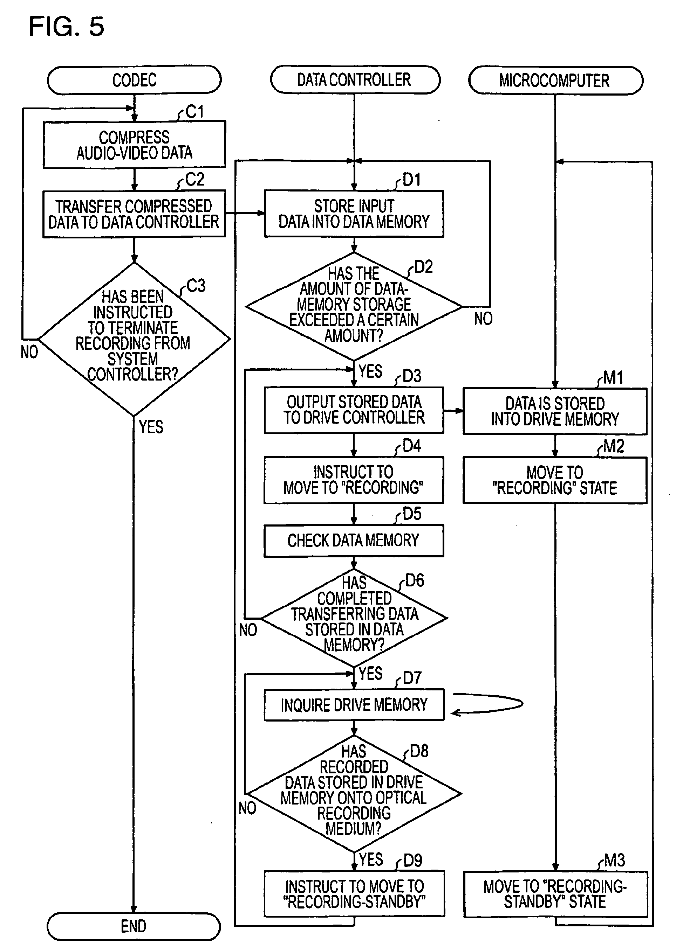

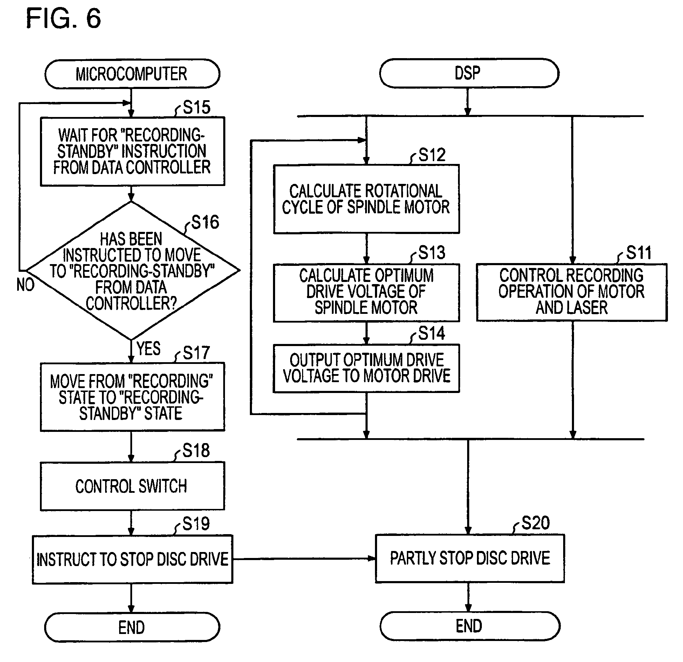

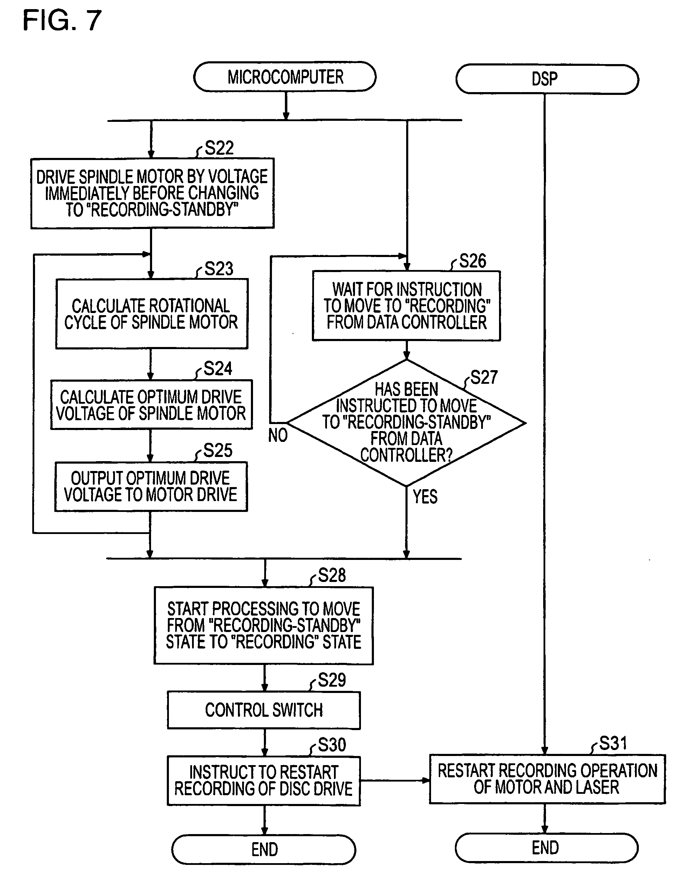

Next, a description will be given of the entire operation of the recording-reproduction apparatus 1 with reference to Fig. 5. A description will be given of the operation of the transition of the disc drive 8 from the "recording" state to the "recording-standby" state with reference to Fig. 6. A description will be given of the operation of the transition of the disc drive 8 from the "recording-standby" state to the "recording" state with reference to Fig. 7.

As shown in Fig. 5, the CODEC 5 compresses the audio-video data input from the camera 11, an external device, etc., (step C1), and outputs the compressed audio-video data to the data controller 6 (step C2). When the CODEC 5 receives the input of a recording-stop instruction from the system controller 3 (step C3; YES), the CODEC 5 terminates the compression processing of the audio-video data. On the other hand, when the CODEC 5 does not receive the input of a recording-stop instruction from the system controller 3 (step C3; NO), the CODEC 5 repeats the processing of step C1 to step C2.

The data controller 6 stores the input audio-video data into the data memory 61 (step D1). The data controller 6 checks the amount of storage of the audio-video data. If the amount of storage exceeds a certain amount (step D2; YES), the data controller 6 outputs the data stored in the data memory 61 into the drive controller 7 (step S3), and instructs the microcomputer 74 to change the disc drive 8 to the "recording" state (step D4).

The microcomputer 74 stores the audio-video data input from the data controller 7 into the drive memory 71 (step M1), and changes the disc drive 8 to the "recording" state (step M2) by receiving the instruction from the data controller 6. On the other hand, when the amount of the storage in the data memory 61 does not exceed a certain amount (step D2; NO), the data controller 6 instructs the microcomputer 74 to change the disc drive 8 to the "recording-standby" state (step D4), and the microcomputer 74 changes the disc drive 8 to the "recording-standby" state by receiving the instruction (step M3).

The data controller 6 also checks the data memory 61 in the "recording" state (step D5). If it is confirmed that all the audio-video data stored in the data memory 61 has been transferred to the drive controller 7 (step D6; YES), an inquiry is conducted subsequently on whether all the data transferred to the drive memory 71 has been recorded onto the optical recording medium (step D7). If that confirmation is made (step D8; YES), the data controller 6 instructs the microcomputer 74 to change the disc drive 8 to the "recording-standby" state (step D9). The microcomputer 74 receives the instruction, and changes the disc drive 8 to the "recording-standby" state (step M3). If the audio-video data that has not been recorded onto the optical recording medium remains stored in the data memory 61 and the drive memory 71 (step D6; NO, D8; NO), the "recording" state is kept.

The flowchart in Fig. 6 illustrates the operation of the microcomputer 74 and the DSP 73 when the processing moves from the "recording operation" state to the "wait recording" state. In the "recording" state, the DSP 73 controls all of the laser emitting part 81, the reflection-light receiving part 82, the focus motor 83, the tracking motor 84, the thread motor 85, the tilt motor 86, and the spindle motor 87 of the disc drive 8, and records the data onto the optical recording medium (step S11).

The DSP 73 receives the input of the rectangular wave in accordance with the number of rotations of the spindle motor 87 from the frequency generator 89 of the spindle motor 87. The DSP 73 counts the edges of the rectangular wave by an edge-counting function to calculate the rotational cycle of the spindle motor 87 (step S12). The DSP 73 calculates the optimum drive voltage of the spindle motor 87 based on the calculated rotational cycle (step S13), and outputs the voltage to the motor drive 91 (step S14).

The microcomputer 74 waits for the instruction from the data controller 6 to move to the "recording-standby" state while the DSP 73 is recording the data onto the optical recording medium (step S15). When the microcomputer 74 receives the instruction from the data controller 6 to move from the "recording" state to the "recording-standby" state (step S16; YES), the microcomputer 74 starts the processing to change the disc drive 8 from the "recording" state to the "recording-standby" state (step S17). On the other hand, if the microcomputer 74 does not receive the instruction from the data controller 6 in step S15 (step S16; NO), the microcomputer 74 continues to wait for the instruction from the data controller 6.

For the processing to move to the "recording-standby" state, the microcomputer 74 controls the switch 75 to connect the motor drive 91 and the microcomputer 74 (step S18), and stops the focus motor 83, the tracking motor 84, the thread motor 85, the tilt motor 86, the RF amplifier 88, the laser emitting part 81, the reflection-light receiving part 82, and the DSP 73 (step S19). Thus, the recording operation of the DSP 73 is stopped (step S20), and the control of the spindle motor is changed from the DSP 73 to the microcomputer 74.

Fig. 7 is a flowchart illustrating the operation of the microcomputer 74 and the DSP 73 when the processing moves from the "wait recording" state to the "recording operation" state. In the "recording-standby" state, the microcomputer 74 controls the spindle motor 87. The microcomputer 74 starts supplying voltage to the spindle motor 87 using the optimum drive voltage immediately before changing to the "recording-standby" state as an initial value (step S22). For the supply source of the voltage, a method of smoothing the output of PWM (Pulse Width Modulation) contained in the microcomputer 74 and using it is considered. Next, the microcomputer 74 receives the input of the rectangular wave in accordance with the number of rotations of the spindle motor 87 from the frequency generator 89 of the spindle motor 87. The microcomputer 74 counts the edges of the rectangular wave to calculate the rotational cycle of the spindle motor 87 (step S23). The microcomputer 74 calculates the optimum drive voltage of the spindle motor 87 based on the calculated rotational cycle (step S24), and supplies the optimum voltage to the spindle motor 87 (step S25).

The microcomputer 74 waits for the instruction to move to the "recording" state from the data controller 6 during the "recording-standby" state (step S26). When the microcomputer 74 receives the instruction to move to the "recording" state (step S27; YES), the microcomputer 74 starts the processing to move the disc drive 8 from the "recording-standby" state to the "recording" state (step S28). For the processing to move to the "recording" state, the microcomputer 74 controls the switch 75 to connect the motor drive 91 and the DSP 73 (step S29), and outputs the control signal to the DSP 73 and the motor drive 91 (step S30). The DSP 73 returns itself from the stop state in response to the control signal from the microcomputer 74, and restarts the recording operation of the motor drive 91, the focus motor 83, the tracking motor 84, the tilt motor 86, the RF amplifier 88, the laser emitting part 81, and the reflection-light receiving part 82 (step S31).

As described above, the recording-reproduction apparatus 1 to which the present invention is applied performs intermittent recording in which the "recording" state and the "recording-standby" state are alternately repeated. During the "recording-standby" state, the operations other than the operation of the spindle motor 87 are stopped, and thus power consumption is reduced. Also, the control of the spindle motor 87 is performed by the microcomputer 74, and thus it is possible to keep the spindle motor 87 to run at an appropriate number of rotations even if the load on the spindle motor 87 temporarily changes due to impact, vibration, force of inertia, etc.

Next, a description will be given of the reproduction processing. The recording-reproduction apparatus 1 performs intermittent reproduction. In the intermittent reproduction, a "reading" state and a "reading-standby" state of an optical recording medium are repeated alternately. In the "reading-standby" state, the recording-reproduction apparatus 1 performs processing to reduce power consumption in the same manner as in the "recording-standby" state.

A description will be given of the operations to the CODEC 5, the data controller 6, and the drive controller 7 at reproduction time. The DSP 73 of the drive controller 7 drives the laser emitting part 81 through the RF amplifier 88 to emit laser onto the optical recording medium. The reflection-light receiving part 82 outputs the signal based on the reflection light from the optical recording medium to the DSP 73.

The DSP 73 converts the signal from the reflection-light receiving part 82 into digital data. This data is compressed audio-video data. The DSP 73 stores this data into the drive memory 71. The microcomputer 74 transfers the audio-video data stored in the drive memory 71 to the data controller 6. The data controller 6 stores the audio-video data input from the drive controller 7 into the data memory 61. The CODEC 5 reads the compressed audio-video data from the data memory 61, and expands the audio-video data that has been read.

The data controller 6 controls the data flow between the CODEC 5 and the drive controller 7. When the data controller 6 stores a certain amount of the audio-video data read by the drive controller 7, the data controller 6 outputs the control signal to stop the reading of the data to the drive controller 7. While the drive controller 7 stops the reading of the data, the data controller 6 outputs the stored audio-video data to the CODEC 5. While the CODEC 5 is expanding the audio-video data, the disc drive 8 goes into the "reading-standby" state. When the disc drive 8 is in the "reading-standby" state, the microcomputer 74 of the drive controller 7 stops the operation of the DSP 73 and a part of the operation of the motor drive 91, and performs the control of the spindle motor 87 in place of the DSP 73.

When the data controller 6 outputs the audio-video data stored in the data memory 61 to the CODEC 5, the data controller 6 outputs the control signal to restart the reading of the data to the drive controller 7. Thus, the disc drive 8 becomes the "reading" state. The microcomputer 74 of the drive controller 7 restarts the operations of the DSP 73, the laser emitting part 81, a laser receiving part, the focus motor 83, the tracking motor 84, the thread motor 85, the tilt motor 86, the spindle motor 87, and the motor drive 91.

As described above, the recording-reproduction apparatus 1 to which the present invention is applied performs intermittent recording in which the "reading" state and the "reading-standby" state are alternately repeated. During the "reading-standby" state, the operations other than the operation of the spindle motor 87 are stopped, and thus power consumption is reduced. Also, the control of the spindle motor 87 is performed by the microcomputer 74 in the "reading-standby" state, and thus it is possible to keep the spindle motor 87 to run at an appropriate number of rotations even if the load on the spindle motor 87 temporarily changes due to impact, vibration, force of inertia, etc.

It should be understood by those skilled in the art that various modifications, combinations, sub-combinations and alterations may occur depending on design requirements and other factors insofar as they are within the scope of the appended claims.

## Claims

1. A recording apparatus comprising:
recording means (8) having a drive part (91. 87) including rotational drive means (87) for rotating an optical recording medium in order to record data onto the optical recording medium;
data coding means (5) for coding data; and
recording control means (7) for storing the coded data into storage means (71), and controlling the recording means (8) to record the data stored in the storage means (71) onto the optical recording medium,
wherein the recording control means (7) includes
overall control means (74) for controlling the recording control means (7) overall, and
servo control means (73) for servo-controlling the drive part (91. 87) of the recording means (8),
**characterized in that**
in a recording-standby state standing by to store the coded data, the overall control means (74) stops operation of the servo control means (73) and at the same time switches to servo-control the rotational drive means (87) by applying a voltage for setting a rotational frequency of the rotational drive means (87) to a target rotational frequency and by feeding back the rotational frequency of the rotational drive means (87).

2. The recording apparatus according to claim 1,
wherein the overall control means (74) is a microcomputer, and a recording state and a recording-standby state are changed in accordance with a storage state of the coded data.

3. A method of controlling a recording apparatus having recording means (8) comprising a drive part (91, 87) including rotational drive means (87) for rotating an optical recording medium in order to record data onto the optical recording medium, the method comprising the steps of:
coding data;
storing the coded data and controlling the recording means (8) by recording control means (7) to record the stored data onto the optical recording medium;
controlling the recording control means (7) overall by overall control means (74);
servo-controlling the drive part (91, 87) of the recording means (8) by servo control means (73) when storing the coded data is completed in a recording state:
**characterized by** the step of
stopping operation of the servo control means (73) and at the same time servo-controlling the rotational drive means (87) by the overall control means (74) in a recording-standby state standing by to store the coded data, by applying a voltage for setting a rotational frequency of the rotational drive means (87) to a target rotational frequency and by feeding back the rotational frequency of the rotational drive means (87).

4. A reproduction apparatus comprising:
reading means (8) having a drive part (91. 87) including rotational drive means (87) for rotating an optical recording medium in order to read coded data recorded in the optical recording medium;
read control means (7) for controlling the reading means (8);
storing means (71) for storing the read coded data; and
decoding means (5) for decoding the stored coded data,
wherein the read control means (7) includes
overall control means (74) for controlling the read control means (7) overall, and
servo control means (73) for servo-controlling the drive part (87) of the reading means (8),
**characterized in that**
in a reading-standby state standing by to decode the coded data stored in the storing means (71), the overall control means (74) stops operation of the servo control means (73) and at the same time servo-controls the rotational drive means (87) by applying a voltage for setting a rotational frequency of the rotational drive means (87) to a target rotational frequency and by feeding back the rotational frequency of the rotational drive means (87).

5. The reproduction apparatus according to claim 4.
wherein the overall control means (74) is a microcomputer, and a reading state and a reading-standby state are changed in accordance with a storage state of the storing means (71).

6. A method of controlling a reproduction apparatus having a drive part (91, 87) including rotational drive means (87) for rotating an optical recording medium in order to read coded data recorded onto the optical recording medium, the method comprising the steps of:
reading coded data recorded in the optical recording medium of the reproduction apparatus;
storing the read coded data into storing means (71);
decoding the stored coded data by decoding means (5);
controlling the read control means (7) overall by overall control means (74) and
servo-controlling the drive part (87) of the reading means (8) by servo control means (73. 89) in a reading state,
**characterized by** the step of
stopping operation of the servo control means (73) and at the same time servo-controlling the rotational drive means (87) by the overall control means (74) in a reading-standby state standing by to decode the coded data stored in the storing means (71), by applying a voltage for setting a rotational frequency of the rotational drive means (87) to a target rotational frequency and by feeding back the rotational frequency of the rotational drive means (87).

## Patentansprüche

1. Aufzeichnungsvorrichtung, mit:
Aufzeichnungsmitteln (8), die einen Antriebsabschnitt (91, 87) mit Drehantriebsmitteln (87) zum Drehen eines optischen Aufzeichnungsmediums enthalten, um Daten auf das optische Aufzeichnungsmedium aufzuzeichnen;
Datencodierungsmitteln (5) zum Codieren von Daten; und
Aufzeichnungssteuermitteln (7) zum Speichern der codierten Daten in Speichermitteln (71) und zum Steuern der Aufzeichnungsmittel (8), um die in den Speichermitteln (71) gespeicherten Daten auf das optische Aufzeichnungsmedium aufzuzeichnen,
wobei die Aufzeichnungssteuermittel (7) versehen sind mit
Gesamtsteuermitteln (74) zum Steuern der Aufzeichnungssteuermittel (7) insgesamt und
Servosteuermitteln (73) zum Servosteuern des Antriebsabschnitts (91, 87) der Aufzeichnungsmittel (8),
**dadurch gekennzeichnet, dass**
in einem Aufzeichnungsbereitschaftszustand, in dem die Vorrichtung bereit ist, die codierten Daten zu speichern, die Gesamtsteuermittel (74) den Betrieb der Servosteuermittel (73) anhalten und gleichzeitig zu einer Servosteuerung der Drehantriebsmittel (87) umschalten, indem eine Spannung zum Setzen einer Drehfrequenz der Drehantriebsmittel (87) auf eine Solldrehfrequenz angelegt wird und indem die Drehfrequenz der Drehantriebsmittel (87) rückgekoppelt wird.

2. Aufzeichnungsvorrichtung nach Anspruch 1,
wobei die Gesamtsteuermittel (74) ein Mikrocomputer sind und ein Auf zeichnungszustand und ein Aufzeichnungsbereitschaftszustand in Übereinstimmung mit einem Speicherzustand der codierten Daten geändert werden.

3. Verfahren zum Steuern einer Aufzeichnungsvorrichtung, die Aufzeichnungsmittel (8) enthält, die ihrerseits einen Antriebsabschnitt (91, 87) enthält, der Drehantriebsmittel (87) zum Drehen eines optischen Aufzeichnungsmediums aufweist, um Daten auf das optische Aufzeichnungsmedium aufzuzeichnen, wobei das Verfahren die folgenden Schritte umfasst:
Codieren von Daten;
Speichern der codierten Daten und Steuern der Aufzeichnungsmittel (8) durch Aufzeichnungssteuermittel (7), um die gespeicherten Daten auf das optische Aufzeichnungsmedium aufzuzeichnen;
Steuern der Aufzeichnungssteuermittel (7) insgesamt durch Gesamtsteuermittel (74);
Servosteuern des Antriebsabschnitts (91, 87) der Aufzeichnungsmittel (8) durch Servosteuermittel (73), wenn das Speichern der codierten Daten in einem Aufzeichnungszustand abgeschlossen ist;
**gekennzeichnet durch** den folgenden Schritt:
Anhalten des Betriebs der Servosteuermittel (73) und gleichzeitig Servosteuern der Drehantriebsmittel (87) **durch** die Gesamtsteuermittel (74) in einem Aufzeichnungsbereitschaftszustand, in dem die Aufzeichnungsvorrichtung bereit ist, die codierten Daten aufzuzeichnen, indem eine Spannung zum Setzen einer Drehfrequenz der Drehantriebsmittel (87) auf eine Solldrehfrequenz gesetzt wird und indem die Drehfrequenz der Drehantriebsmittel (87) rückgekoppelt wird.

4. Wiedergabevorrichtung, mit:
Lesemitteln (8) mit einem Antriebsabschnitt (91, 87), der Drehantriebsmittel (87) zum Drehen eines optischen Aufzeichnungsmediums enthält, um codierte Daten, die auf das optische Aufzeichnungsmedium aufgezeichnet worden sind, zu lesen;
Lesesteuermitteln (7) zum Steuern der Lesemittel (8);
Speichermitteln (71) zum Speichern der gelesenen codierten Daten; und
Decodierungsmitteln (5) zum Decodieren der gespeicherten codierten Daten,
wobei die Lesesteuermittel (7) versehen sind mit:
Gesamtsteuermitteln (74) zum Steuern der Lesesteuermittel (7) insgesamt und
Servosteuermitteln (73) zum Servosteuern des Antriebsabschnitts (87) der Lesemittel (8),
**dadurch gekennzeichnet, dass**
in einem Lesebereitschaftszustand, in dem die Wiedergabevorrichtung bereit ist, um die in den Speichermitteln (71) gespeicherten codierten Daten zu decodieren, die Gesamtsteuermittel (74) den Betrieb der Servosteuermittel (73) anhalten und gleichzeitig die Drehantriebsmittel (87) servosteuern, indem eine Spannung zum Setzen einer Drehfrequenz der Drehantriebsmittel (87) auf eine Solldrehfrequenz angelegt wird und indem die Drehfrequenz der Drehantriebsmittel (87) rückgekoppelt wird.

5. Wiedergabevorrichtung nach Anspruch 4,
wobei die Gesamtsteuermittel (74) ein Mikrocomputer sind und ein Lesezustand und ein Lesebereitschaftszustand in Übereinstimmung mit einem Speicherzustand der Speichermittel (71) geändert werden.

6. Verfahren zum Steuern einer Wiedergabevorrichtung, die einen Antriebsabschnitt (91, 87) mit Drehantriebsmitteln (87) zum Drehen eines optischen Aufzeichnungsmediums enthält, um codierte Daten, die auf das optische Aufzeichnungsmedium aufgezeichnet worden sind, zu lesen, wobei das Verfahren die folgenden Schritte enthält:
Lesen codierter Daten, die auf das optische Aufzeichnungsmedium der Wiedergabevorrichtung aufgezeichnet worden sind;
Speichern der gelesenen codierten Daten in Speichermitteln (71);
Decodieren der gespeicherten codierten Daten durch Decodierungsmittel (5);
Steuern der Lesesteuermittel (7) insgesamt durch Gesamtsteuermittel (74) und
Servosteuern des Antriebsabschnitts (87) der Lesemittel (8) durch Servosteuermittel (73, 89) in einem Lesezustand,
**gekennzeichnet durch** den folgenden Schritt:
Anhalten des Betriebs der Servosteuermittel (73) und gleichzeitig Servosteuern der Drehantriebsmittel (87) **durch** die Gesamtsteuermittel (74) in einem Lesebereitschaftszustand, in dem die Wiedergabevorrichtung bereit ist, die in den Speichermitteln (71) gespeicherten codierten Daten zu decodieren, indem eine Spannung zum Setzen einer Drehfrequenz der Drehantriebsmittel (87) auf eine Solldrehfrequenz angelegt wird und indem die Drehfrequenz der Drehantriebsmittel (87) rückgekoppelt wird.

## Revendications

1. Appareil d'enregistrement comprenant :
des moyens d'enregistrement (8) comportant une partie d'entraînement (91, 87) comprenant des moyens d'entraînement en rotation (87) pour faire tourner un support d'enregistrement optique afin d'enregistrer des données sur le support d'enregistrement optique ;
des moyens de codage de données (5) pour coder des données ; et
des moyens de commande d'enregistrement (7) pour mémoriser les données codées dans des moyens de mémorisation (71), et commander les moyens d'enregistrement (8) pour enregistrer les données mémorisées dans les moyens de mémorisation (71) sur le support d'enregistrement optique,
dans lequel les moyens de commande d'enregistrement (7) comprennent
des moyens de commande globale (74) pour commander les moyens de commande d'enregistrement (7) globalement, et
des moyens d'asservissement (73) pour asservir la partie d'entraînement (91, 87) des moyens d'enregistrement (8),
**caractérisé en ce que**
dans un état d'attente d'enregistrement attendant pour mémoriser les données codées, les moyens de commande globale (74) arrêtent le fonctionnement des moyens d'asservissement (73) et, en même temps, commutent pour asservir les moyens d'entraînement en rotation (87) en appliquant une tension pour fixer une fréquence de rotation des moyens d'entraînement en rotation (87) à une fréquence de rotation cible et en renvoyant la fréquence de rotation des moyens d'entraînement en rotation (87).

2. Appareil d'enregistrement selon la revendication 1,
dans lequel les moyens de commande globale (74) sont un micro-ordinateur, et un état d'enregistrement et un état d'attente d'enregistrement sont commutés conformément à un état de mémorisation des données codées.

3. Procédé de commande d'un appareil d'enregistrement comportant des moyens d'enregistrement (8) comprenant une partie d'entraînement (91, 87) comprenant des moyens d'entraînement en rotation (87) pour faire tourner un support d'enregistrement optique afin d'enregistrer des données sur le support d'enregistrement optique, le procédé comprenant les étapes consistant à :
coder des données ;
mémoriser les données codées et commander les moyens d'enregistrement (8) par des moyens de commande d'enregistrement (7) pour enregistrer les données mémorisées sur le support d'enregistrement optique ;
commander les moyens de commande d'enregistrement (7) globalement par des moyens de commande globale (74) ;
asservir la partie d'entraînement (91, 87) des moyens d'enregistrement (8) par des moyens d'asservissement (73) lorsque la mémorisation des données codées est achevée dans un état d'enregistrement ;
**caractérisé par** l'étape consistant à
arrêter le fonctionnement des moyens d'asservissement (73) et, en même temps, asservir les moyens d'entraînement en rotation (87) par les moyens de commande globale (74) dans un état d'attente d'enregistrement attendant pour mémoriser les données codées, en appliquant une tension pour fixer une fréquence de rotation des moyens d'entraînement en rotation (87) à une fréquence de rotation cible et en renvoyant la fréquence de rotation des moyens d'entraînement en rotation (87).

4. Appareil de reproduction comprenant :
des moyens de lecture (8) comportant une partie d'entraînement (91, 87) comprenant des moyens d'entraînement en rotation (87) pour faire tourner un support d'enregistrement optique afin de lire des données codées enregistrées sur le support d'enregistrement optique ;
des moyens de commande de lecture (7) pour commander les moyens de lecture (8) ;
des moyens de mémorisation (71) pour mémoriser les données codées lues ; et
des moyens de décodage (5) pour décoder les données codées mémorisées,
dans lequel les moyens de commande de lecture (7) comprennent
des moyens de commande globale (74) pour commander les moyens de commande de lecture (7) globalement, et
des moyens d'asservissement (73) pour asservir la partie d'entraînement (87) des moyens de lecture (8),
**caractérisé en ce que**
dans un état d'attente de lecture attendant pour décoder les données codées mémorisées dans les moyens de mémorisation (71), les moyens de commande globale (74) arrêtent le fonctionnement des moyens d'asservissement (73) et, en même temps, asservissent les moyens d'entraînement en rotation (87) en appliquant une tension pour fixer une fréquence de rotation des moyens d'entraînement en rotation (87) à une fréquence de rotation cible et en renvoyant la fréquence de rotation des moyens d'entraînement en rotation (87).

5. Appareil de reproduction selon la revendication 4,
dans lequel les moyens de commande globale (74) sont un micro-ordinateur, et un état de lecture et un état d'attente de lecture sont commutés conformément à un état de mémorisation des moyens de mémorisation (71).

6. Procédé de commande d'un appareil de reproduction comportant une partie d'entraînement (91, 87) comprenant des moyens d'entraînement en rotation (87) pour faire tourner un support d'enregistrement optique afin de lire des données codées enregistrées sur le support d'enregistrement optique, le procédé comprenant les étapes consistant à :
lire des données codées enregistrées sur le support d'enregistrement optique de l'appareil de reproduction ;
mémoriser les données codées lues dans des moyens de mémorisation (71) ;
décoder les données codées mémorisées par des moyens de décodage (5) ;
commander les moyens de commande de lecture (7) globalement par des moyens de commande globale (74) ; et
asservir la partie d'entraînement (87) des moyens de lecture (8) par des moyens d'asservissement (73, 89) dans un état de lecture,
**caractérisé par** l'étape consistant à
arrêter le fonctionnement des moyens d'asservissement (73) et, en même temps, asservir les moyens d'entraînement en rotation (87) par les moyens de commande globale (74) dans un état d'attente de lecture attendant pour décoder les données codées mémorisées dans les moyens de mémorisation (71), en appliquant une tension pour fixer une fréquence de rotation des moyens d'entraînement en rotation (87) à une fréquence de rotation cible et en renvoyant la fréquence de rotation des moyens d'entraînement en rotation (87).
